# FASCICULE DE BREVET EUROPEEN

(11) **EP 3 587 211 B1**
(45) Date de publication et mention de la délivrance du brevet: **04.05.2022**
(21) Numéro de dépôt: 19183391.2
(22) Date de dépôt: 28.06.2019
(51) Int. Cl.: B61C 3/02

(54) **VÉHICULE FERROVIAIRE À SYSTÈME DE RECHARGE STATIONNAIRE**
SCHIENENFAHRZEUG MIT STATIONÄREM AUFLADESYSTEM
RAILWAY VEHICLE WITH STATIONARY RECHARGING SYSTEM

(30) Priorité: 29.06.2018 FR 1855988
(43) Date de publication de la demande: 01.01.2020
(73) Titulaire: ALSTOM Transport Technologies, 93400 Saint-Ouen (FR)
(72) Inventeur: MUSSET, Sébastien, 17220 Sainte Soulle (FR); LE-ROUX, Ludovic, 17100 Saintes (FR); HACHET, Joël, 17220 Clavette (FR)
(74) Mandataire: Lavoix

(56) Documents cités:
- EP-A1- 0 968 873
- EP-A1- 1 967 436
- EP-A1- 3 309 038
- DE-A1-102011 082 516
- KR-A- 20120 016 715

## Description

La présente invention concerne un véhicule ferroviaire comprenant un système de recharge stationnaire.

Un tel véhicule ferroviaire comporte des moyens de stockage d'énergie, notamment destinés à alimenter des moteurs électriques de ce véhicule ferroviaire. Ces moyens de stockage d'énergie sont rechargés lorsque le véhicule ferroviaire stationne en station, grâce au système de recharge stationnaire.

A cet effet, le véhicule ferroviaire comporte des éléments de captage stationnaire, destinés à coopérer avec un plot de recharge complémentaire, généralement fixe, lorsque le véhicule est arrêté en station, par exemple pendant le débarquement et embarquement de passagers. Par exemple, chaque élément de captage est un frotteur et le plot de recharge est formé par un rail conducteur.

Lorsque le véhicule ferroviaire est arrêté en station, de l'énergie électrique est acheminée depuis des armoires électriques vers le plot de recharge, et le système de recharge stationnaire récupère l'énergie électrique via les éléments de captage stationnaire, pour la stocker dans les moyens de stockage (comprenant par exemple des supercondensateurs). Cette énergie électrique est suffisante pour permettre au véhicule ferroviaire de parvenir au moins à la station suivante. Un tel système est connu du document EP 0968873 A1.

L'invention vise à améliorer un tel système de recharge stationnaire et à notamment le rendre d'une part compatible avec plusieurs longueurs de véhicules, par exemple des véhicules de 30 m et de 40 m, et d'autre part, propre à assurer un niveau de redondance opérationnelle en cas de défaillance sur un plot de recharge au sol ou bien sur un élément de captage embarqué.

A cet effet, l'invention a notamment pour objet un véhicule ferroviaire, comprenant une pluralité de caisses alignées, la pluralité de caisses comportant une caisse suspendue centrale et deux caisses porteuses disposées de part et d'autre de la caisse suspendue centrale et adjacentes à cette caisse suspendue centrale, le véhicule ferroviaire comportant un système de recharge stationnaire par conduction, caractérisé en ce que le système de recharge stationnaire comporte, pour chaque caisse porteuse, un élément de captage stationnaire équipant cette caisse porteuse.

Les éléments de captage stationnaire étant disposés symétriquement par rapport à la caisse suspendue centrale, ces éléments de captage stationnaire peuvent coopérer avec des mêmes plots de recharge quel que soit le sens de circulation du véhicule ferroviaire, avec un arrêt du véhicule ferroviaire au même endroit. De plus ils permettent d'assurer une redondance opérationnelle en cas de défaillance sur un plot de recharge au sol ou bien sur un élément de captage embarqué.

Il est donc possible de disposer les plots de recharge sur une longueur moins importante que dans l'état de la technique, où il était nécessaire de prévoir des plots de recharge différents dans les deux sens de circulation pour un arrêt du véhicule ferroviaire au même endroit.

Un véhicule ferroviaire selon l'invention peut comporter en outre l'une ou plusieurs des caractéristiques suivantes, prises seules ou selon toutes combinaisons techniquement envisageables.
- Chaque élément de captage stationnaire est porté par un bras s'étendant en direction de la caisse suspendue centrale.
- L'élément de captage stationnaire de l'une des caisses porteuses est espacé de l'élément de captage stationnaire de l'autre des caisses porteuses d'une première distance comprise entre 3 et 9 mètres.
- Le véhicule comporte un système de recharge dynamique, comprenant, pour au moins l'une des caisses porteuses, de préférence pour chaque caisse porteuse, un élément de captage dynamique, notamment un pantographe, équipant cette caisse porteuse.
- La pluralité de caisses comporte deux caisses suspendues intermédiaires, chacune adjacente à une caisse porteuse respective, et deux caisses d'extrémité, chacune adjacente à une caisse suspendue intermédiaire respective.

L'invention concerne également une gamme de véhicules ferroviaires comprenant :
- au moins un premier véhicule tel que défini précédemment,
- au moins un second véhicule, le second véhicule comportant une caisse porteuse centrale comportant deux éléments de captage stationnaire, deux caisses suspendues intermédiaires disposées de part et d'autre de la caisse porteuse centrale et deux caisses d'extrémité chacune adjacente à une caisse suspendue intermédiaire respective.

De manière optionnelle :
- les dimensions longitudinales respectives des caisses porteuses des premier et second véhicules sont identiques,
- les dimensions longitudinales des caisses suspendues intermédiaires des premier et second véhicules sont identiques, et
- les dimensions longitudinales des caisses d'extrémité des premier et second véhicules sont identiques.

De manière optionnelle, les caisses porteuses des premier et second véhicules sont identiques et comprennent chacune deux éléments de captage stationnaire.

L'invention sera mieux comprise à la lecture de la description qui va suivre, donnée uniquement à titre d'exemple et faite en se référant aux figures annexée, parmi lesquelles :
- la figure 1 représente schématiquement un véhicule ferroviaire selon un exemple de mode de réalisation de l'invention, arrêté à une station de recharge stationnaire selon l'invention, et comparé à un véhicule ferroviaire connu ;
- la figure 2 est une vue similaire à la figure 1, représentant les véhicules de la figure 1 arrêtés à des positions différentes de celle de la figure 1.

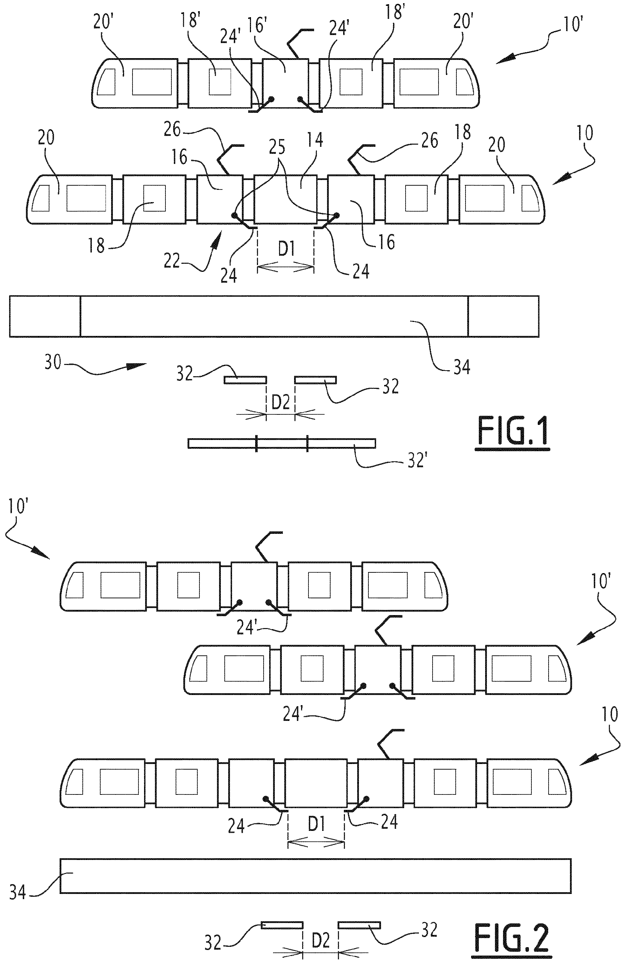

On a représenté, sur la figure1, un premier véhicule ferroviaire 10 selon un exemple de mode de réalisation de l'invention. On a également représenté, pour comparaison, un second véhicule ferroviaire 10' de type connu. Ces premier et second véhicules font partie d'une gamme de véhicules utilisés dans le cadre de l'invention.

Le premier véhicule ferroviaire 10 est un véhicule long, par exemple un tramway de 40 m de long. Le premier véhicule ferroviaire 10 comporte une pluralité de caisses alignées, comprenant une caisse suspendue centrale 14, deux caisses porteuses 16 disposées de part et d'autre de la caisse suspendue 14 et adjacentes à cette caisse suspendue centrale 14, deux caisses suspendues intermédiaires 18, chacune adjacente à l'une respective des caisses porteuses 16, et deux caisses d'extrémité 20, chacune adjacente à l'une respective des caisses suspendues intermédiaires 18.

Les caisses porteuses 16 et les caisses d'extrémité 20 comportent chacune un bogie qui lui est propre. Au moins l'un des bogies est motorisé, par exemple les bogies des caisses porteuses 16 sont motorisés.

Chaque caisse est reliée aux caisses qui lui sont adjacentes par un dispositif d'intercirculation connu en soi.

Le second véhicule ferroviaire 10' est un véhicule court, par exemple un tramway de 30 m de long. Le second véhicule ferroviaire 10' comporte une caisse porteuses centrale 16', deux caisses suspendues intermédiaires 18', chacune adjacente à la caisse porteuse 16', et deux caisses d'extrémité 20', chacune adjacente à l'une respective des caisses suspendues intermédiaires 18'.

La caisse porteuse 16' et les caisses d'extrémité 20' comportent chacune un bogie qui lui est propre. Au moins l'un des bogies est motorisé.

Chaque caisse est reliée aux caisses qui lui sont adjacentes par un dispositif d'intercirculation connu en soi.

Le premier véhicule ferroviaire 10 comporte un système de recharge stationnaire par conduction 22 comportant, pour chaque caisse porteuse 16, un élément de captage stationnaire 24 équipant cette caisse porteuse 16.

Chaque élément de captage stationnaire 24 est relié électriquement, de manière classique, à des moyens de stockage d'énergie classiques (non représentés).

Dans l'exemple décrit, chaque élément de captage stationnaire 24 est porté par un bras 25 s'étendant en direction de la caisse suspendue centrale 14.

Ainsi, l'élément de captage stationnaire 24 de l'une des caisses porteuses 16 est espacé de l'élément de captage stationnaire 24 de l'autre des caisses porteuses 16 d'une première distance D1 comprise entre 3 et 9 mètres.

Le second véhicule ferroviaire 10' comporte également un système de recharge stationnaire par conduction comprenant, deux éléments de captage stationnaire 24' équipant la caisse porteuse 16'.

Chaque élément de captage stationnaire 24' est relié électriquement, de manière classique, à des moyens de stockage d'énergie classiques (non représentés).

Dans l'exemple décrit, chaque élément de captage stationnaire 24' est porté par un bras s'étendant chacun en direction de l'une respective des caisses suspendues intermédiaires 18'.

Les éléments de captage stationnaire 24' sont espacé l'un de l'autre d'une distance comprise entre 2 et 6 mètres. Cette distance est sensiblement la même que la première distance D1.

Avantageusement, le premier véhicule ferroviaire 10 comporte un système de recharge dynamique, comprenant, pour chaque caisse porteuse 16, un élément de captage dynamique 26, notamment un pantographe, équipant cette caisse porteuse 16.

Les éléments de captage dynamique 26 sont destinés à coopérer avec une caténaire (non représentée). Par exemple, les éléments de captage dynamique 26 sont utilisés sur des portions de voie pourvues de caténaires, et les éléments de captage stationnaire sont utilisés sur des portions de voie dépourvues de caténaires.

On a par ailleurs représenté, sur la figure, une station de recharge stationnaire 30. Cette station comporte deux plots de recharge 32 indépendants, agencés à proximité d'un quai 34 auquel le premier véhicule ferroviaire 10 est destiné à s'arrêter pour débarquer et embarquer des passagers. Avantageusement les plots de recharge 32 sont alimentés en énergie électrique par un organe d'alimentation différent afin d'assurer une redondance opérationnelle.

Chaque plot de recharge 32 est destiné à coopérer avec l'un respectif des éléments de captage stationnaire 24. Les composants sont électriquement dimensionnés pour permettre l'opération de recharge en station au niveau d'un seul couple plot de recharge / élément de captage stationnaire.

A cet effet, les plots de recharge 32 sont séparés l'un de l'autre d'une seconde distance D2 inférieure à ladite première distance D1, les rendant ainsi électriquement indépendants. Plus particulièrement, chaque plot de recharge 32 étant formé par un rail conducteur s'étendant entre une extrémité extérieure et une extrémité intérieure, telles que les extrémités intérieures des deux rails sont en regard l'une de l'autre, alors la distance entre l'extrémité extérieure de l'un des rails et l'extrémité intérieure de l'autre rail est inférieure ou égale à la première distance D1. On assure ainsi que les deux éléments de recharge stationnaire 24 sont en situation de coopérer avec leur plot de recharge 32 respectif.

On notera que, la distance entre les éléments de recharge stationnaire 24' du second véhicule ferroviaire 10' étant sensiblement identique à la première distance D1, le second véhicule ferroviaire 10' peut également être rechargé par la station de recharge 30.

On a par ailleurs représenté sur la figure 1 un plot de recharge alternatif 32' pouvant être utilisé en variante des plots de recharge 32 précédemment décrits. Un tel plot de recharge 32' s'étend de manière à pouvoir coopérer avec les deux éléments de recharge stationnaire 24 à la fois. Compte tenu de l'agencement des éléments de recharge stationnaire 24 selon l'invention, qui fait que ces éléments de recharge stationnaire 24 sont positionnés sensiblement au même endroit lorsque le premier véhicule ferroviaire 10 est à l'arrêt à la station de recharge 30, cela quel que soit le sens de circulation, alors le plot de recharge 32' présente une longueur inférieure à celle d'un plot de recharge de l'état de la technique.

Cette variante est plus économique car elle ne nécessite une mise sous tension que d'un plot de recharge au lieu de deux, mais elle ne permet en revanche plus la redondance en cas de panne de cet unique plot de recharge.

On notera que, dans le cas où la station de recharge 30 comporte deux plots de recharge 32, il est possible de faire fonctionner cette station de recharge 30 même en cas de défaillance sur l'un des plots de recharge 32. Il reste en effet possible de recharger les moyens de stockage d'énergie à partir du plot de recharge actif, compte-tenu du dimensionnement des équipements (recharge nominale du train en un seul point).

En cas de double défaillance, l'une au niveau d'un plot de recharge 32 et l'autre au niveau de l'élément de recharge stationnaire 24 opposé, il est possible de décaler l'arrêt du premier véhicule ferroviaire 10 afin de pouvoir charger sur le l'élément de recharge stationnaire 24 fonctionnel et le plot de recharge 32 fonctionnel.

Cette redondance n'est toutefois pas possible dans le cas d'un unique plot de recharge 32'.

La figure 1 représente les deux véhicules de 30 et 40 mètres positionnés centrés sur le quai 34.

La figure 2 représente une alternative d'arrêt des véhicules courts de 30 m en bout de quai. Dans ces conditions, et quel que soit le sens de circulation de la rame, il y a bien toujours un élément de recharge stationnaire 24' en situation de coopérer avec l'un des plots de recharge 32.

Cette alternative d'arrêt des véhicules courts permettant au conducteur d'arrêter toujours l'avant de son véhicule au même endroit (repère unique en extrémité de quai), que le véhicule soit court ou bien long, permet une simplification de conduite. Pour cette alternative, un seul élément de recharge stationnaire 24' est en situation de coopérer avec un unique plot de recharge 32. En cas d'avarie et sur information en cabine d'un défaut sur l'un de ces deux éléments, il appartiendrait donc au conducteur de procéder à un arrêt centré ou bien un arrêt dans laquelle l'extrémité arrière du véhicule est en regard de l'extrémité arrière du quai pour retrouver le couple 24'/32 actif et assurer ainsi la recharge.

On envisagera donc un procédé de commande de l'arrêt d'un véhicule ferroviaire à la station de recharge, comportant les étapes suivantes :
- Identification d'un mode de fonctionnement du véhicule ferroviaire parmi un mode dégradé et un mode normal.
- Identification du type de véhicule ferroviaire en déterminant si le véhicule ferroviaire correspond au ou à l'un des premiers véhicules 10 ou au ou à l'un des deuxièmes véhicules 10'.
- Commande de l'arrêt du véhicule ferroviaire en une première position par rapport au quai 34 de la station lorsque le véhicule ferroviaire est en mode de fonctionnement normal ou que le véhicule ferroviaire est en mode de fonctionnement dégradé et qu'il correspond au ou à l'un des premiers véhicules 10. Dans cette première position (premier et troisième cas sur la figure 2), l'extrémité avant du véhicule est positionnée au niveau d'un premier repère disposé à une extrémité avant du quai 34 suivant un sens de circulation du véhicule ferroviaire.
- Commande de l'arrêt du véhicule ferroviaire en une deuxième position par rapport au quai de la station 34, différente de la première position, lorsque le véhicule ferroviaire est en mode de fonctionnement dégradé et qu'il correspond au ou à l'un des deuxièmes véhicules 10'. Dans cette seconde position (deuxième cas sur la figure 2), l'extrémité arrière du véhicule 10' est positionnée au niveau d'un deuxième repère disposé à une extrémité arrière du quai suivant un sens de circulation du véhicule ferroviaire.

En variante, la deuxième position correspond à une position centrée du véhicule 10' par rapport au quai 34. Le choix de l'une ou l'autre des variantes de deuxième position dépend de quel élément de captage stationnaire 24' on souhaite faire coopérer avec quel plot de recharge 32.

On notera que, lorsque le véhicule ferroviaire correspond au ou à l'un des premiers véhicules 10 et qu'il est arrêté dans la première position, chaque élément de captage stationnaire 2) est en regard de l'un respectif des plots de recharge 32. Lorsque le véhicule ferroviaire correspond au ou à l'un des seconds véhicules 10' et qu'il est arrêté dans la première position, un seul des éléments de captage stationnaire 24' est en regard de l'un des plots de recharge 32. Lorsque le véhicule ferroviaire correspond au ou à l'un des seconds véhicules 10' et qu'il est arrêté dans la deuxième position, chaque élément de captage stationnaire 24' est en regard de l'un respectif des plots de recharge 32, si la deuxième position correspond à la position centrée par rapport au quai, et un seul des éléments de captage 24' est en regard de l'un respectif des plots de recharge 32, si la deuxième position correspond à une position dans laquelle l'extrémité arrière du véhicule ferroviaire est en regard du deuxième repère.

On notera que l'invention n'est pas limitée au mode de réalisation précédemment décrit, et pourrait présenter diverses variantes dans le cadre des revendications.

En particulier, bien que la description ci-dessus présente des éléments de recharge stationnaire 24 au sol, on peut envisager de manière équivalente des éléments de recharge stationnaire en toiture ou autre.

## Revendications

1. Véhicule ferroviaire (10), comprenant une pluralité de caisses (14, 16, 18, 20) alignées, la pluralité de caisses comportant une caisse suspendue centrale (14) et deux caisses porteuses (16) disposées de part et d'autre de la caisse suspendue centrale (14) et adjacentes à cette caisse suspendue centrale (14), le véhicule ferroviaire (10) comportant un système (22) de recharge stationnaire par conduction, **caractérisé en ce que** le système de recharge stationnaire (22) comporte, pour chaque caisse porteuse (16), un élément de captage stationnaire (24) équipant cette caisse porteuse (16).

2. Véhicule ferroviaire (10) selon la revendication 1, comportant un système de recharge dynamique, comprenant, pour au moins l'une des caisses porteuses (16), de préférence pour chaque caisse porteuse, un élément de captage dynamique (26), notamment un pantographe, équipant cette caisse porteuse (16).

3. Véhicule ferroviaire (10) selon l'une quelconque des revendications précédentes, dans lequel la pluralité de caisses comporte deux caisses suspendues intermédiaires (18), chacune adjacente à une caisse porteuse (16) respective, et deux caisses d'extrémité (20), chacune adjacente à une caisse suspendue intermédiaire (18) respective.

4. Gamme de véhicules ferroviaires comprenant :
- au moins un premier véhicule (10) selon l'une quelconque des revendications 1 à 3,
- au moins un second véhicule (10'), le second véhicule (10') comportant une caisse porteuse centrale (16') comportant deux éléments de captage stationnaire (24'), deux caisses suspendues intermédiaires (18') disposées de part et d'autre de la caisse porteuse centrale (16') et deux caisses d'extrémité (20') chacune adjacente à une caisse suspendue intermédiaire (18') respective.

5. Gamme de véhicules selon la revendication 4, dans laquelle chaque premier véhicule (10) est selon la revendication 3, et dans laquelle :
- les dimensions longitudinales respectives des caisses porteuses (16, 16') des premier (10) et second (10') véhicules sont identiques,
- les dimensions longitudinales des caisses suspendues intermédiaires (18, 18') des premier (10) et second (10') véhicules sont identiques, et
- les dimensions longitudinales des caisses d'extrémité (20, 20') des premier (10) et second (10') véhicules sont identiques.

6. Gamme de véhicules selon la revendication 4 ou 5, dans laquelle les caisses porteuses (16, 16') des premier (10) et second (10') véhicules sont identiques et comprennent chacune deux éléments de captage stationnaire.

## Patentansprüche

1. Schienenfahrzeug (10), umfassend eine Vielzahl von ausgerichteten Wagenkästen (14, 16, 18, 20), die Vielzahl von Wagenkästen umfassend einen mittleren aufgehängten Wagenkasten (14) und zwei tragende Wagenkästen (16), die auf beiden Seiten des mittleren aufgehängten Wagenkastens (14) und angrenzend an diesen mittleren aufgehängten Wagenkastens (14) angeordnet sind, das Schienenfahrzeug (10) umfassend ein stationäres Ladesystem (22) durch Leitung, **dadurch gekennzeichnet, dass** das stationäre Ladesystem (22) für jeden tragenden Wagenkasten (16) ein stationäres Aufnahmeelement (24) umfasst, mit dem dieser tragende Wagenkasten (16) ausgestattet ist.

2. Schienenfahrzeug (10) nach Anspruch 1, umfassend ein dynamisches Nachladesystem, umfassend für mindestens einen der tragenden Wagenkästen (16), vorzugsweise für jeden tragenden Wagenkasten, ein dynamisches Erfassungselement (26), insbesondere einen Stromabnehmer, mit dem dieser tragende Wagenkasten (16) ausgestattet ist.

3. Schienenfahrzeug (10) nach einem der vorherigen Ansprüche, wobei die Vielzahl von Wagenkästen zwei mittlere aufgehängte Wagenkästen (18), die jeweils an einen entsprechenden tragenden Wagenkasten (16) angrenzen, und zwei Endwagenkästen (20), die jeweils an einen entsprechenden mittleren aufgehängten Wagenkasten (18) angrenzen, umfasst.

4. Reihe von Schienenfahrzeugen, umfassend:
- mindestens ein erstes Fahrzeug (10) nach einem der Ansprüche 1 bis 3,
- mindestens ein zweites Fahrzeug (10'), das zweite Fahrzeug (10') umfassend einen mittleren tragenden Wagenkasten (16') umfassend zwei stationäre Aufnahmeelemente (24'), zwei mittlere aufgehängte Wagenkästen (18'), die auf beiden Seiten des mittleren tragenden Wagenkastens (16') angeordnet sind, und zwei Endwagenkästen (20'), die jeweils an einen jeweiligen mittleren aufgehängten Wagenkasten (18') angrenzen.

5. Reihe von Fahrzeugen nach Anspruch 4, wobei jedes erste Fahrzeug (10) nach Anspruch 3 ist, und wobei:
- die jeweiligen Längsabmessungen der tragenden Wagenkästen (16, 16') des ersten (10) und des zweiten (10') Fahrzeugs identisch sind,
- die Längsabmessungen der mittleren aufgehängten Wagenkästen (18, 18') des ersten (10) und des zweiten (10') Fahrzeugs identisch sind, und
- die Längsabmessungen der Endwagenkästen (20, 20') des ersten (10) und des zweiten (10') Fahrzeugs identisch sind.

6. Reihe von Fahrzeugen nach Anspruch 4 oder 5, wobei die tragenden Wagenkästen (16, 16') des ersten (10) und des zweiten (10') Fahrzeugs identisch sind und jeweils zwei stationäre Aufnahmeelemente umfassen.

## Claims

1. A railway vehicle (10), comprising a plurality of bodies (14, 16, 18, 20) aligned in a row, the plurality of bodies including a central hanging body (14) and two carrying bodies (16) disposed on either side of and adjacent to the central hanging body (14), the railway vehicle (10) comprising a system (22) for stationary recharging by conduction, **characterised in that** the stationary recharging system (22) comprises, for each carrying body (16), a stationary collection element (24) equipping that carrying body (16).

2. The railway vehicle (10) according to claim 1, comprising a dynamic charging system, comprising, for at least one of the carrying bodies (16), preferably for each carrying body, a dynamic collection element (26), in particular a pantograph, equipping that carrying body (16).

3. The railway vehicle (10) according to any one of the preceding claims, wherein the plurality of bodies comprises two intermediate hanging bodies (18), each adjacent to a respective carrying body (16), and two end bodies (20), each adjacent to a respective intermediate hanging body (18).

4. A range of rail vehicles including:
- at least one monitoring system (10) according to any of claims 1 to 3.
- at least one second vehicle (10'), the second vehicle (10') comprising a central carrying body (16') comprising two stationary collection elements (24'), two intermediate hanging bodies (18') arranged on either side of the central carrying body (16') and two end bodies (20') each adjacent to a respective intermediate hanging body (18').

5. The range of vehicles as claimed in claim 4, wherein each first vehicle (10) is as claimed in claim 3, and wherein:
- the respective longitudinal dimensions of the carrying bodies (16, 16') of the first (10) and second (10') vehicles are identical,
- the longitudinal dimensions of the intermediate hanging bodies (18, 18') of the first (10) and second (10') vehicles are identical, and
- the longitudinal dimensions of the end bodies (20, 20') of the first (10) and second (10') vehicles are identical.

6. The range of vehicles according to claim 4 or 5, wherein the carrying bodies (16, 16') of the first (10) and second (10') vehicles are identical and each comprise two stationary collection elements.
